# DEMANDE DE BREVET EUROPEEN

(11) **EP 0 909 971 A1**
(43) Date de publication de la demande: **21.04.1999**
(21) Numéro de dépôt: 97402415.0
(22) Date de dépôt: 14.10.1997
(51) Int. Cl.: G02B 26/06

(54) **Procédé pour corriger la surface d'onde d'un faisceau optique au moyen d'un miroir déformable et mirroir pour la mise en oeuvre du procédé**

(71) Demandeur: GIAT INDUSTRIES, 78000 Versailles (FR)
(72) Inventeur: Sauvageot, Paul, 65000 Tarbes (FR)

(57) **Abrégé**

Procédé pour corriger la surface d'onde d'un faisceau optique, en particulier d'un faisceau laser, au moyen d'un miroir déformable (1), le procédé consistant à déformer la surface du miroir (1) à l'aide d'actionneurs (5) en fonction de la forme de la correction à apporter à la surface d'onde du faisceau optique tombant sur ce miroir (1), procédé qui est caractérisé en ce qu'il consiste à modifier la structure du miroir (1) de manière à faire correspondre les déformations du miroir (1) suivant sensiblement les premiers modes propres ou modes de vibration naturelle dudit miroir (1) avec les corrections de la surface d'onde à effectuer.

## Description

La présente invention a pour objet un procédé pour corriger la surface d'onde d'un faisceau optique au moyen d'un miroir déformable, ainsi qu'un miroir pour la mise en oeuvre du procédé.

D'une manière générale, la surface d'onde d'un faisceau optique est affectée de défauts qui sont préjudiciables à la qualité du faisceau optique transmis, ce qui altère les performances du système optique associé à ce faisceau.

En observation astronomique par exemple, un grand télescope comprend notamment un miroir primaire, un miroir secondaire et un système optique pour analyser et observer le faisceau incident qui a été successivement réfléchi par les miroirs primaire et secondaire.

La surface d'onde du faisceau optique qui est reçue par le télescope est affectée par des défauts causés par les turbulences atmosphériques, les flexions de la structure du télescope, le désalignement des optiques, les défauts grande échelle du miroir primaire...

Dans le cas d'un faisceau laser de grande énergie, la surface d'onde du faisceau peut être notamment affectée par les défauts causés par les tolérances de fabrication qui sont contraignantes et des déformations d'ordre thermique des composants optiques du laser, et les effets du pompage laser.

Pour corriger les défauts de la surface d'onde d'un faisceau optique dans le cas d'un télescope ou d'un laser, il est connu d'utiliser des miroirs déformables qui peuvent présenter une forme plane, parabolique ou toute autre géométrie qui est adaptée au système optique dans lequel ces miroirs sont intégrés. Le plus souvent, le miroir présente deux faces planes parallèles, et des actionneurs sont utilisés pour appliquer des efforts et/ou imposer des déplacements pour engendrer des déformations du miroir.

Dans le cas d'un télescope par exemple, il est connu de prévoir un miroir déformable pour corriger les aberrations du front d'onde. Pour effectuer la correction, on déforme ponctuellement le miroir à partir d'une pluralité d'actionneurs qui sont sélectivement commandés en fonction des défauts à corriger. Cependant, une telle correction impose la présence d'un nombre important d'actionneurs, ce qui aboutit à une structure complexe et délicate à mettre en oeuvre car les réglages sont très difficiles à maîtriser et donc à réaliser.

L'objet de l'invention est de pallier ces inconvénients en se basant sur une approche nouvelle qui consiste à faire référence aux modes de vibration du miroir.

Plus précisément, en prenant l'exemple d'une plaque que l'on excite en la frappant d'un coup de marteau, la plaque va se mettre à vibrer. Les vibrations résultantes vont se décomposer en plusieurs vibrations élémentaires différentes que l'on appelle communément les modes propres ou modes de vibration naturelle de la plaque. Supposons que la surface de correction d'onde souhaitée soit une vague sinusoïdale par exemple. D'une manière générale, la plaque ne va pas vibrer naturellement comme une vague, si bien qu'il faut modifier la forme de la plaque pour qu'elle puisse vibrer comme une vague. Des actionneurs sont donc utilisés pour déformer mécaniquement la plaque qui de par son comportement mobile aura alors une tendance naturelle à se déformer suivant une vague. Pour être efficaces, les actionneurs sont répartis dans les zones d'extremum de déformation plutôt que dans les autres zones, lorsque l'on choisit de positionner les actionneurs perpendiculairement à la surface du miroir.

On comprend alors qu'il faut utiliser un nombre important d'actionneurs pour déformer un miroir selon la forme des corrections à apporter à la surface d'onde d'un faisceau optique qui tombe sur ce miroir.

Or, selon l'invention, on va prendre en compte les modes propres de vibration du miroir pour optimiser sa déformation en fonction des corrections à apporter.

A cet effet, l'invention propose un procédé pour corriger la surface d'onde d'un faisceau optique, en particulier d'un faisceau laser, au moyen d'un miroir déformable, le procédé consistant à déformer la surface du miroir à l'aide d'actionneurs en fonction de la forme de la correction à apporter à la surface d'onde du faisceau optique tombant sur ce miroir, procédé qui est caractérisé en ce qu'il consiste à modifier la structure du miroir de manière à faire correspondre les déformations du miroir suivant sensiblement les premiers modes propres ou modes les plus bas en fréquence de vibration naturelle dudit miroir avec les corrections de la surface d'onde à effectuer.

Ainsi, en fonction de la forme de la correction à apporter à la surface d'onde du faisceau optique, on donne au miroir une structure ou géométrie telle qu'après déformation les modes propres de vibration du miroir correspondent sensiblement à la forme des corrections à apporter.

L'invention concerne également un dispositif de déformation d'un miroir pour corriger la surface d'onde d'un faisceau optique, en particulier d'un faisceau laser, le miroir comprenant un substrat dont une face est recouverte d'une surface réfléchissante, et des actionneurs pour déformer au moins localement la surface du miroir en fonction de la forme de la correction de la surface d'onde à effectuer, dispositif qui est caractérisé en ce que le miroir comprend des moyens tels que sa structure est modifiée pour que les modes premiers propres ou modes de vibration naturelle de plus basse fréquence dudit miroir correspondent sensiblement à la forme des corrections à apporter à la surface d'onde du faisceau.

A titre d'exemple, les moyens précités qui permettent de modifier la structure du miroir pour que sa déformation au moyen des actionneurs soit faite suivant sensiblement les premiers modes propres du miroir qui correspondent à la forme des corrections à apporter, sont constitués :
- par des nervures parallèles entre elles et situées sur la face du substrat qui est opposée à la surface réfléchissante, le nombre, l'espacement et la forme de la section droite de chaque nervure étant déterminés en fonction de la forme de la correction à apporter,
- par un miroir dont le substrat présente une épaisseur variable, ou
- par un miroir dont le substrat est constitué de plusieurs couches en des matériaux ayant des rigidités différentes.

Concrètement, la déformation du miroir va être assurée par des actionneurs, mais la structure du miroir est telle qu'il faudra un nombre limité de ces actionneurs pour déformer le miroir suivant les formes qui correspondent sensiblement aux premiers modes propres de vibration du miroir qui correspondent eux-mêmes sensiblement aux formes de correction qu'il faut apporter à la surface d'onde du faisceau.

Un miroir selon l'invention présente de nombreux avantages parmi lesquels on peut notamment citer
- une amélioration de la qualité de la correction apportée, notamment au voisinage des bords du miroir et entre les actionneurs,
- une diminution notable du nombre des actionneurs nécessaires pour déformer le miroir,
- une diminution notable du coût de fabrication, et
- une diminution de l'encombrement occupé par les actionneurs.

D'une manière générale, un tel miroir peut être par exemple utilisé pour corriger la surface d'onde d'un faisceau optique dans un amplificateur laser de grande énergie.

D'autres avantages, caractéristiques et détails de l'invention ressortiront de la description explicative qui va suivre, faite en référence aux dessins annexés, donnés uniquement à titre d'exemple et dans lesquels :
- la figure 1 est une vue en coupe schématique d'un miroir et d'un dispositif de déformation de ce miroir pour la mise en oeuvre du procédé selon l'invention,
- la figure 2 est une vue en coupe d'un miroir selon un mode de réalisation de l'invention, et
- la figure 3 est un exemple d'une forme d'onde de correction à apporter à la surface d'onde d'un faisceau optique.

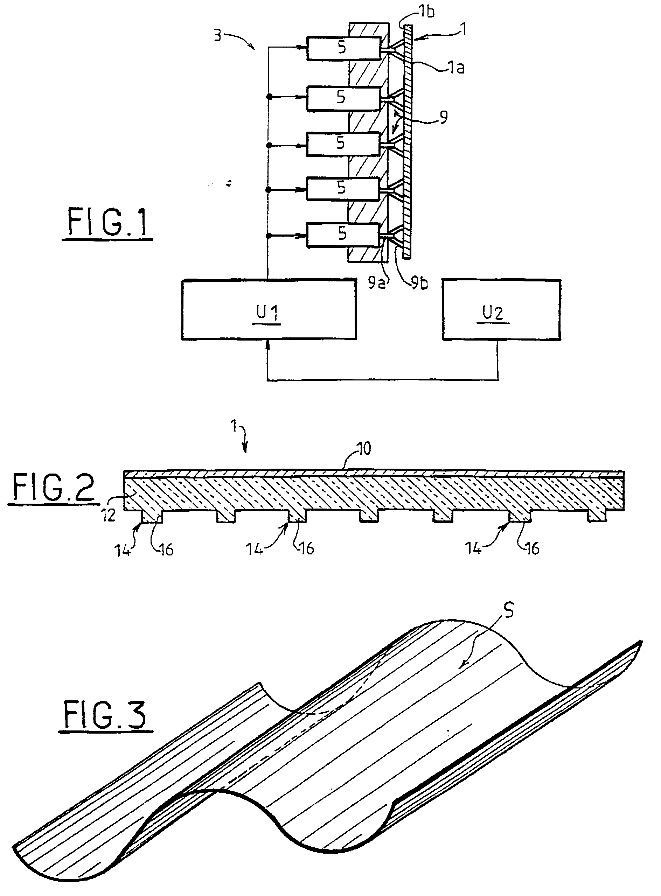

Un miroir déformable 1 selon l'invention peut être déformé au moyen d'un dispositif de déformation 3 qui est schématiquement illustré sur la figure 1. Le miroir 1 comprend deux faces planes principales opposées la et 1b, la face la étant par exemple celle qui est destinée à recevoir la surface d'onde d'un faisceau optique.

Le dispositif de déformation 3 comprend plusieurs actionneurs 5 qui sont supportés par un barillet 7 par exemple. Chaque actionneur 5 est relié au miroir 1 par un dispositif interface 9.

A titre d'exemple, chaque dispositif interface 9 peut comprendre une tige 9a mobile en translation, qui est reliée à l'actionneur 5 d'une part, et à un étrier 9b lui-même fixé sur la face 1b du miroir 1 d'autre part.

Tous les actionneurs 5 sont commandés à partir d'une unité de commande U1 qui est pilotée par une unité de contrôle U2. L'unité de contrôle U2 a pour fonction d'analyser la surface d'onde du faisceau et de déterminer les corrections à apporter, et elle transmet des ordres à l'unité de commande U1 pour déformer le miroir 1 selon la forme souhaitée par une action sélective sur les actionneurs 5.

Selon un mode de réalisation illustré à la figure 2, ce miroir 1 est un miroir plan qui comprend une surface réfléchissante 10 qui est déposée sur une face d'un substrat 12.

D'une manière générale, le substrat 12 est équipé ou coopère avec des moyens 14 qui ont pour fonction de lui conférer une meilleure aptitude à' la déformation selon le comportement souhaité.

A titre d'exemple, la surface opposée du substrat 12 est équipée de ces moyens 14 qui sont par exemple des nervures 16 parallèles les unes aux autres. Ces nervures 16 peuvent être obtenues par usinage du substrat ou être rapportées sur celui-ci par collage. Ces nervures 16 ont une section droite rectangulaire, mais cette section peut être trapézoïdale, triangulaire ou d'une forme quelconque. Ces moyens 14 ne sont pas nécessairement constitués dans le même matériau que le substrat 12.

En variante, ces moyens 14 peuvent être constitués par un miroir dont l'épaisseur est variable ou dont le substrat est constitué de plusieurs couches ayant des épaisseurs différentes et/ou constitué par des couches ayant des rigidités différentes.

Ces moyens 14 sont déterminés à partir de la forme des corrections qu'il faut apporter à la surface d'onde du faisceau optique. Ainsi, supposons que la correction à apporter soit une forme sinusoïdale S, comme cela est schématiquement illustré sur la figure 3. Dans ce cas, on va donner aux moyens 14 une forme ou une structure telle, qu'après déformation du miroir 1 par les actionneurs 5, les premiers modes propres de vibration du miroir 1 correspondent sensiblement à la forme sinusoïdale S de la correction à apporter à la surface d'onde du faisceau tombant sur le miroir.

Concrètement, dans un exemple d'application le miroir 1 a une section carrée de l'ordre de 40 x 40 cm², et est constitué d'une surface réfléchissante métallique 10 déposée sur un substrat 12 en verre et d'une épaisseur de l'ordre de 15 mm.

D'une manière générale, parmi la famille des surfaces de correction que l'on souhaite apporter au miroir 1, les surfaces prépondérantes en termes de courbures locales sont des sinusoïdes et cosinusoïdes orientées dans une direction privilégiée et dont les longueurs d'ondes sont de 1, 2/3 et 1/2 fois la longueur du miroir 1.

En fonction de la précision de correction recherchée, la structure du miroir 1 précité peut être modifiée par l'adjonction de treize nervures 16 à section droite de forme rectangulaire, régulièrement espacées sur la face 1b du miroir 1 et qui s'étendent sur toute la longueur du miroir 1. Ces nervures 16 sont taillées dans le substrat 12 ou rapportées par collage, par exemple. Les actionneurs 5 qui vont assurer la déformation du miroir 1 sont montés au droit des nervures 16 pour former treize rangées de n actionneurs. Le nombre des actionneurs 5 est choisi en fonction de la précision recherchée et des autres modes de correction souhaités mais qui ne sont pas prépondérants en termes de courbure locale, le nombre d'actionneurs 5 pouvant varier d'une rangée à l'autre. Dans cet exemple, il faudrait par contre utiliser un nombre plus important d'actionneurs, de l'ordre de une fois et demie, pour corriger le même défaut selon l'art antérieur.

## Revendications

1. Procédé pour corriger la surface d'onde d'un faisceau optique, en particulier d'un faisceau laser, au moyen d'un miroir déformable (1), le procédé consistant à déformer la surface du miroir (1) à l'aide d'actionneurs (5) en fonction de la forme de la correction à apporter à la surface d'onde du faisceau optique tombant sur ce miroir (1), procédé qui est caractérisé en ce qu'il consiste à modifier la structure du miroir (1) de manière à faire correspondre les déformations du miroir (1) suivant sensiblement les premiers modes propres ou modes de vibration naturelle dudit miroir (1) avec les corrections de la surface d'onde à effectuer.

2. Dispositif de déformation d'un miroir pour corriger la surface d'onde d'un faisceau optique, en particulier d'un faisceau laser, le miroir (1) comprenant un substrat (12) dont une face est recouverte d'une surface réfléchissante (10), et des actionneurs (5) pour déformer au moins localement la surface du miroir (1) en fonction de la forme de la correction de la surface d'onde à effectuer, caractérisé en ce qu'il comprend des moyens (14) tels que la structure du miroir (1) est modifiée pour que les premiers modes propres ou modes de vibration naturelle dudit miroir (1) correspondent sensiblement à la forme de la correction à apporter à la surface d'onde du faisceau.

3. Dispositif selon la revendication 2, caractérisé en ce que les moyens (14) sont constitués par des nervures (16) situées sur la face du substrat (12) est qui opposée à la surface réfléchissante (10).

4. Dispositif selon la revendication 3, caractérisé en ce que les nervures (16) sont disposées parallèlement les unes aux autres, chaque nervure (16) ayant une section droite de forme appropriée.

5. Dispositif selon la revendication 4, caractérisé en ce que l'espacement entre les nervures (16) est variable.

6. Dispositif selon la revendication 2, caractérisé en ce que les moyens (14) sont constitués par une épaisseur variable donnée au substrat (12).

7. Dispositif selon la revendication 2, caractérisé en ce que les moyens (14) sont constitués par un substrat (12) ayant plusieurs couches.

8. Dispositif selon la revendication 7, caractérisé en ce que les couches ont une épaisseur différente.

9. Dispositif selon la revendication 7 ou 8, caractérisé en ce que les couches sont constituées en différents matériaux ayant des rigidités différentes.
